# EUROPEAN PATENT APPLICATION

(11) **EP 4 425 135 A1**
(43) Date of publication of application: **04.09.2024**
(21) Application number: 22886629.9
(22) Date of filing: 05.10.2022
(51) Int. Cl.: G01L 3/10

(54) **MAGNETOSTRICTIVE TORQUE SENSOR AND METHOD FOR MANUFACTURING MAGNETOSTRICTIVE TORQUE SENSOR**

(30) Priority: 27.10.2021 JP 2021175244
(71) Applicant: NSK Ltd., Tokyo 141-8560 (JP)
(72) Inventor: JIN, Yiming, Tokyo 135-0061 (JP); FUJIMORI, Akitoshi, Tokyo 135-0061 (JP); KUBO, Yoshinori, Tokyo 135-0061 (JP); ONO, Junji, Fujisawa-shi, Kanagawa 251-8501 (JP); FUKUDA, Kota, Fujisawa-shi, Kanagawa 251-8501 (JP); ODERA, Takahiro, Fujisawa-shi, Kanagawa 251-8501 (JP)
(74) Representative: TBK
(86) International application number: PCT/JP2022/037354
(87) International publication number: WO 2023/074297

(57) **Abstract**

Provided are: a magnetostrictive torque sensor with which productivity can be improved more than a case where the magnetostrictive torque sensor is formed by adhering and fixing a flexible substrate having a plurality of coils formed thereon to a hollow cylindrical magnetic ring; and a method for manufacturing the same. This magnetostrictive torque sensor 1, which detects torque applied to a rotating shaft 8 having magnetostrictive effects, comprises: a support member 2 having an inner cylindrical portion 21 into which the rotating shaft 8 is inserted; a flexible substrate 5 that is disposed on the outer periphery of the inner cylindrical portion 21 and on which a plurality of coils 511-519, 521-529, 531-539, 541-549 are formed by wiring patterns; and a heat-shrinkable tube 6 that fastens the flexible substrate 5 toward an outer peripheral surface 21b of the inner cylindrical portion 21. When manufacturing the magnetostrictive torque sensor 1, the heat-shrinkable tube 6 is disposed on the outer periphery of the flexible substrate 5, and the heat-shrinkable tube 6 is shrunk by heating to fasten the flexible substrate 5 to the inner cylindrical portion 21.

## Description

### TECHNICAL FIELD

The present invention relates to a magnetostrictive torque sensor and a method for manufacturing a magnetostrictive torque sensor.

### BACKGROUND ART

Conventionally, for example, magnetostrictive torque sensors are used to detect torque on an output rotating shaft of an automobile engine. The magnetostrictive type torque sensor utilizes the magnetostrictive effect, in which the magnetic permeability of the rotating shaft changes with stress, and is configured to detect torque applied to the rotating shaft based on the change in inductance of detection coils arranged around the rotating shaft. The Applicant has proposed a magnetostrictive torque sensor in which a flexible substrate on which a plurality of detection coils are formed is arranged around a rotating shaft and torque applied to the rotating shaft is detected based on changes in the inductance of the plurality of detection coils (see Patent Literature 1).

The magnetostrictive torque sensor described in Patent Literature 1 has a flexible substrate on which a plurality of first detection coils each having a first linear portion inclined at +45 degrees to an axial direction of a rotating shaft, a plurality of second detection coils each having a second linear portion inclined at -45 degrees to the axial direction of the rotating shaft are formed, and a magnetic ring composed of a hollow cylindrical ferromagnetic material coaxially arranged around the flexible substrate. The flexible substrate is adhesively fixed to an inner peripheral surface of the magnetic ring.

### CITATION LIST

### Patent Literatures

Patent Literature 1: JP2017-49124A

### SUMMARY OF INVENTION

### TECHNICAL PROBLEM

The magnetostrictive torque sensor described in Patent Literature 1 is manufactured by adhesively fixing the flexible substrate to the inner peripheral surface of the hollow cylindrical magnetic ring as described above, so that it was necessary to wait until the adhesive applied to the inner peripheral surface of the magnetic ring or to one side surface of the flexible substrate facing the inner peripheral surface of the magnetic ring hardens. This was an obstacle to improving productivity.

Therefore, it is an object of the invention to provide a magnetostrictive torque sensor and a method for manufacturing a magnetostrictive torque sensor, which can improve productivity compared to the case where a flexible substrate with a plurality of coils is adhesively fixed to a hollow cylindrical magnetic ring to constitute a magnetostrictive torque sensor.

### SOLUTION TO PROBLEM

So as to solve the above problem, one aspect of the present invention provides a magnetostrictive torque sensor, configured to be mounted around a rotating shaft having a magnetostrictive effect and to detect torque applied to the rotating shaft, comprising: a support member having a cylindrical portion through which the rotating shaft is inserted; a flexible substrate arranged around an outer periphery of the cylindrical portion and having a plurality of coils composed of wiring patterns; and a tightening member that tightens the flexible substrate toward an outer peripheral surface of the cylindrical portion.

Further, so as to solve the above problem, another aspect of the present invention provides a method of manufacturing the magnetostrictive torque sensor described above, in which the tightening member is a tubular heat-shrinkable tube that shrinks by heating, comprising: a placing step of placing the flexible substrate around the outer periphery of the cylindrical portion of the support member and placing the heat-shrinkable tube around an outer periphery of the flexible substrate; and a tightening step of tightening the flexible substrate toward the outer peripheral surface of the cylindrical portion by heating the heat-shrinkable tube to shrink the heat-shrinkable tube.

### ADVANTAGEOUS EFFECTS OF INVENTION

According to a magnetostrictive torque sensor and a method for manufacturing a magnetostrictive torque sensor of the present invention, it is possible to improve productivity compared to the case where a flexible substrate with a plurality of coils is adhesively fixed to a hollow cylindrical magnetic ring to constitute a magnetostrictive torque sensor.

### BRIEF DESCRIPTION OF DRAWINGS

FIG. 1 is a perspective view of a magnetostrictive torque sensor according to an embodiment of the present invention.
FIG. 2 is a cross-sectional view of the magnetostrictive torque sensor at line A-A in FIG. 1.
FIG. 3 is a cross-sectional view showing an enlarged part of the magnetostrictive torque sensor.
FIG. 4 is a perspective view showing a support member.
FIG. 5 is a configuration diagram showing a configuration of a flexible substrate and a cable assembled with the support member in axial view.
FIG. 6 is a plan view of the flexible substrate.
FIG. 7 is a cross-sectional view of the flexible substrate.
FIG. 8A is a plan view of wiring patterns of the first to fourth wiring layers of the flexible substrate.
FIG. 8B is a plan view of wiring patterns of the first to fourth wiring layers of the flexible substrate.
FIG. 8C is a plan view of wiring patterns of the first to fourth wiring layers of the flexible substrate.
FIG. 8D is a plan view of wiring patterns of the first to fourth wiring layers of the flexible substrate.
FIG. 9 is a circuit diagram showing an example of an electric circuit composed of a flexible substrate, a cable, an oscillator, and a voltmeter.
FIG. 10 is a perspective view showing a support member, the flexible substrate, and a heat-shrinkable tube.
FIG. 11 is a perspective view showing the state in which the placing step has been completed.
FIG. 12 is a perspective view showing the completion of the tightening step.

### DESCRIPTION OF EMBODIMENT

### [Embodiment]

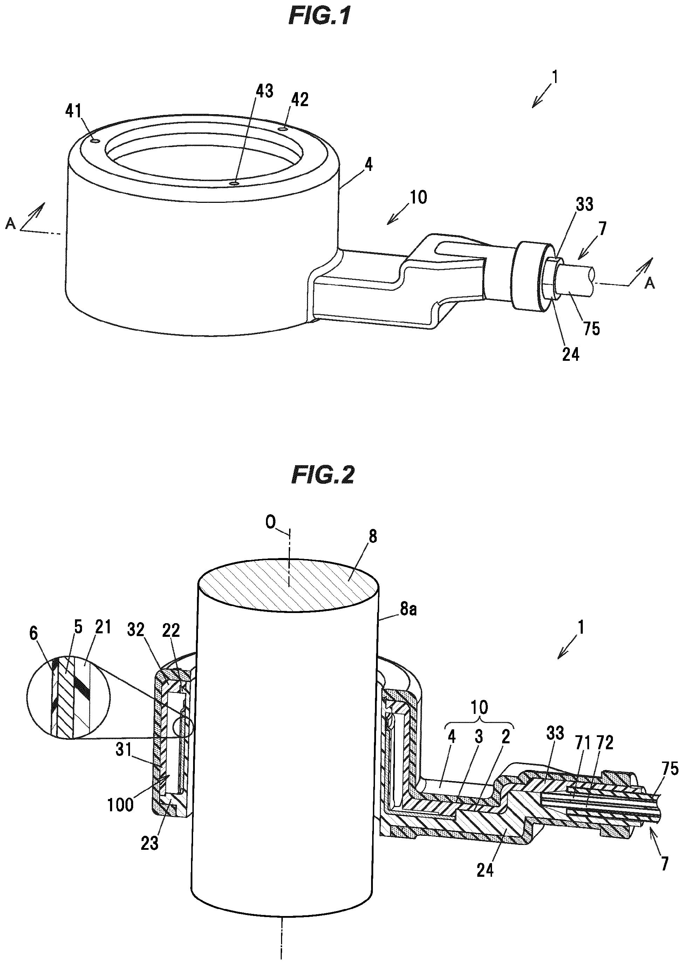

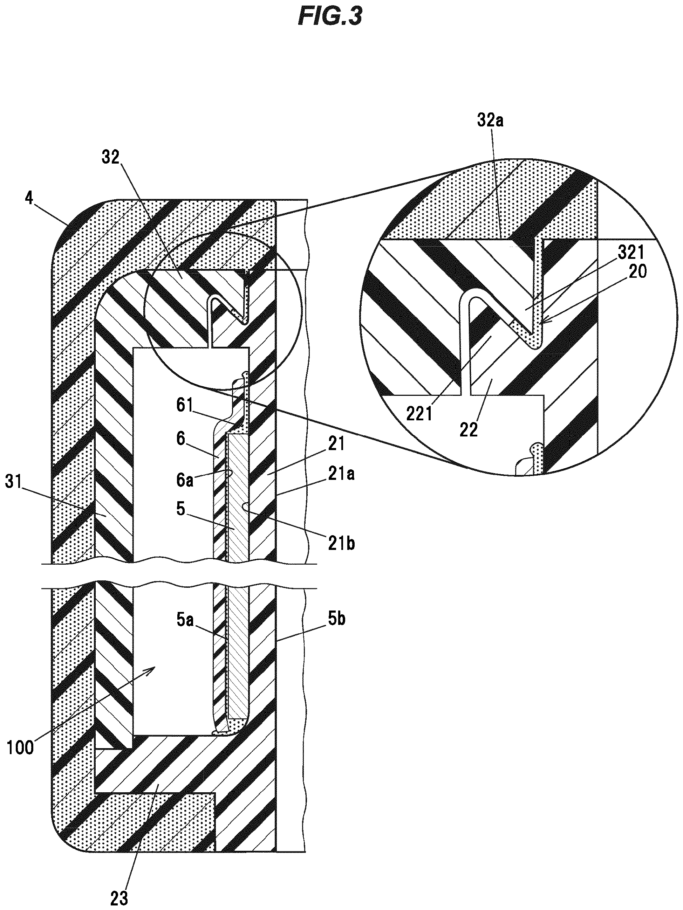

FIG. 1 is a perspective view of a magnetostrictive torque sensor according to an embodiment of the present invention. FIG. 2 is a cross-sectional view of the magnetostrictive torque sensor at line A-A in FIG. 1 together with a rotating shaft on which torque is to be detected. FIG. 3 is a cross-sectional view showing an enlarged part of the magnetostrictive torque sensor.

A magnetostrictive torque sensor 1 is mounted around a rotating shaft 8 and is used to detect torque applied to the rotating shaft 8. The rotating shaft 8 is a shaft that transmits the driving force of a drive source, such as an automobile engine, for example. The torque detection results obtained by the magnetostrictive torque sensor 1 are used to control the drive source, automatic transmission, or the like.

The magnetostrictive torque sensor 1 includes a support member 2 having an inner cylindrical portion 21 into which the rotating shaft 8 is inserted at the center, a cover member 3 having an outer cylindrical portion 31 arranged around the outer periphery of the inner cylindrical portion 21 of the support member 2, a sealing member 4 made of molded resin covering at least a portion of each of the support member 2 and the cover member 3, a flexible substrate 5 arranged around the outer periphery of the inner cylindrical portion 21 of the support member 2, and a heat-shrinkable tube 6 as a tightening member (i.e., clamping member) that tightens the flexible substrate 5 toward an outer peripheral surface 21b of the inner cylindrical portion 21 of the support member 2, and a cable 7 having multiple wires configured to be connected to the flexible substrate 5. The support member 2 and the cover member 3 are injection-molded resin members, and together with the sealing member 4 constitute a housing 10 made of a resin.

A rotating shaft 8 is a ferromagnetic material having a magnetostrictive effect and rotates around a rotation axis O to transmit torque. Here, the magnetostrictive effect is a phenomenon in which a distortion (strain) appears in the shape of a ferromagnetic material when a magnetic field is applied to the ferromagnetic material to magnetize it. By utilizing this phenomenon in reverse, the magnetostrictive torque sensor 1 can detect the torque applied to the rotating shaft 8 by detecting the magnetic field generated by the shape distortion. As the rotating shaft 8, for example, a shaft-like body made of chromium-containing steel such as chrome steel, chrome molybdenum steel, or nickel-chromium molybdenum steel that has been carburized and tempered, and then shot peened can be suitably used. Hereafter, the direction parallel to the rotation axis O of the rotating shaft 8 is referred to as the axial direction.

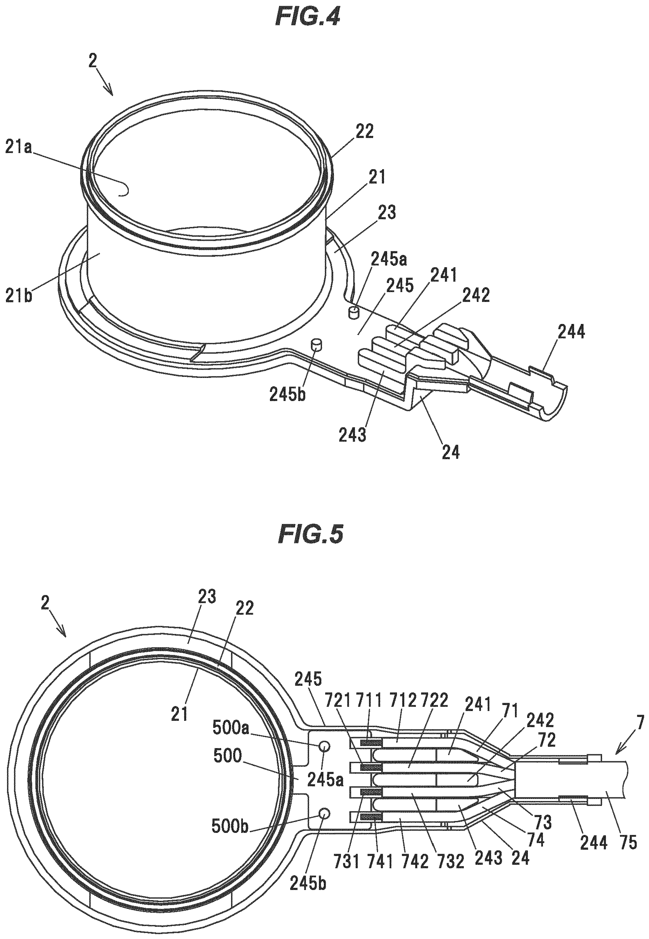

FIG. 4 is a perspective view showing the support member 2. FIG. 5 is a configuration diagram showing the flexible substrate 5 and the cable 7 assembled with the support member 2 in an axial view. The cable 7 has first to fourth wires 71 - 74 and a sheath 75 that collectively covers the first to fourth wires 71 - 74. The first to fourth wires 71 - 74 are insulated wires in which core wires 711, 721, 731, 741 made of good electrically conductive metal are covered by insulating sheaths 712, 722, 732, 742 made of electrically insulating material, respectively.

The support member 2 integrally comprises the inner cylindrical portion 21, an annular-shaped flange 22 provided around an outer periphery of one axial end of the inner cylindrical portion 21, a bottom wall 23 provided around an outer periphery of the other axial end of the inner cylindrical portion 21 and axially opposite to the flange 22, and a cable support portion 24 for supporting the cable 7. The inner cylindrical portion 21 has an inner peripheral surface 21a facing an outer peripheral surface 8a of the rotating shaft 8 and the flexible substrate 5 contacting the outer peripheral surface 21b. The inner cylindrical portion 21 corresponds to the "cylindrical portion" of the present invention. As shown in FIG. 3, the flange 22 has a trapezoidal shape in cross-section along the axial direction, and a part of the flange 22 is a protrusion 221 protruding on the opposite side from the flexible substrate 5-side. An annular recess 20 is formed between the protrusion 221 and the inner cylindrical portion 21.

The cable support portion 24 is provided protruding radially outward from the other axial end of the inner cylindrical portion 21. The cable support portion 24 has first to third wall portions 241 - 243 that divide and support each of the first to fourth wires 71 - 74 at predetermined intervals, a sheath holding portion 244 that holds the sheath 75, and a pedestal portion 245 that supports a protruding piece 500 (described below) of the flexible substrate 5. The pedestal portion 245 is provided with a pair of protrusions 245a, 245b as a fixing portion to fix the protruding piece 500.

The cover member 3 integrally comprises an outer cylindrical portion 31, an annular lid portion 32 provided around an inner periphery of one axial end of an outer cylindrical portion 31, and a cable holding portion 33 that sandwiches the cable 7 between itself and the cable support portion 24 of the support member 2. The other axial end of the outer cylindrical portion 31 is butted against the bottom wall 23 of the support member 2. The outer cylindrical portion 31 forms an annular housing space 100 that houses the flexible substrate 5 and the heat-shrinkable tube 6 between itself and the inner cylindrical portion 21 of the support member 2. At an end of an inner diameter side of the lid portion 32, there is a protrusion 321 that is axially aligned with the flange 22 of the support member 2. The protrusion 321 fits into the recess 20 between the protrusion 221 and the inner cylindrical portion 21 of the flange 22.

The sealing member 4 covers the outer cylindrical portion 31, the lid portion 32, and the cable holding portion 33 of the cover member 3, as well as the axial ends of the inner cylindrical portion 21, the bottom wall 23, and the cable support portion 24 of the support member 2, to prevent moisture and the like from entering the housing space 100. The sealing member 4 is formed by injecting molten liquid mold resin into a mold in which the support member 2 and the cover member 3 are arranged. The mold resin is injected through a plurality of injection holes provided at a portion facing the end surface 32a on the opposite side of the housing space 100-side in the lid portion 32 of the cover member 3.

As shown in FIG. 1, three injection marks 41 to 43 of mold resin are formed on the sealing member 4. The injection marks 41 to 43 are traces of mold resin that remained in the injection holes of the mold. As shown in FIG. 3, a small gap is formed between the support member 2 and the cover member 3, but because this gap is formed into a labyrinth shape with a Z-shaped cross-section by the interlocking of the protrusions 221, 321, which prevents the molten mold resin from entering the housing space 100 and coming into contact with the flexible substrate 5 and heat-shrinkable tube 6. In other words, the housing space 10 is configured by the cover member 3 to prevent the mold resin from contacting the flexible substrate 5 and the heat-shrinkable tube 6.

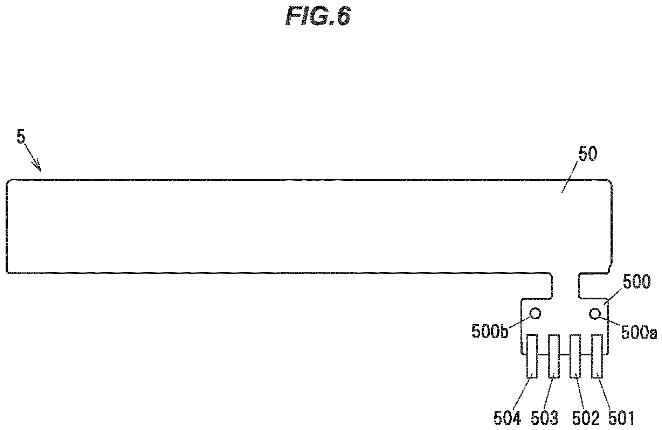

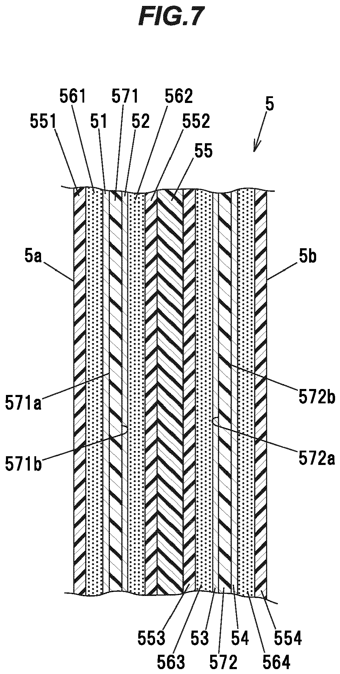

FIG. 6 is a plan view of the flexible substrate 5. FIG. 7 is a cross-sectional view of the flexible substrate 5. The flexible substrate 5 has a strip portion (band-shape portion) 50 extending in a longitudinal direction (left and right direction in FIG. 6) and a protruding piece 500 extended from the strip portion 50 along a shortitudinal direction perpendicular to the longitudinal direction. First to fourth terminals 501 to 504 are provided at the tip of the protruding piece 500. The first to fourth terminals 501 to 504 are connected to the respective core wires 711, 721, 731, 741 of the first to fourth wires 71 to 74 supported on the cable support portion 24 of the support member 2 by soldering or welding.

The protruding piece 500 has mating holes 500a, 500b, into which a pair of protrusions 245a, 245b provided on the pedestal portion 245 in the cable support portion 24 fit. The mating holes 500a, 500b penetrate the protruding piece 500 in a thickness direction. The protruding piece 500 is fixed to the cable support portion 24 by fitting the pair of protrusions 245a, 245b into the mating holes 500a, 500b.

The flexible substrate 5 has a multilayer structure with the first to fourth wiring layers 51 to 54, and is arranged in a cylindrical curved shape to surround the inner cylindrical portion 21 of the support member 2 from the outside. The flexible substrate 5 is composed of a coverlay film 551, an adhesive layer 561, a first wiring layer 51, a first base film 571, a second wiring layer 52, an adhesive layer 562, a coverlay film 552, a double-sided tape 58, a coverlay film 553, an adhesive layer 563, a third wiring layer 53, a second base film 572, a fourth wiring layer 54, an adhesive layer 564, and a coverlay film 554 that are laminated in this order, from one side 5a, which is outside the curve, to the other side surface 5b, which is inside the curve.

The first wiring layer 51 and the second wiring layer 52 are wiring patterns formed by etching copper foil and are formed on a front surface 571a and a back surface 571b of the first base film 571, respectively. Similarly, the third wiring layer 53 and the fourth wiring layer 54 are wiring patterns formed by etching copper foil and are formed on a front surface 572a and a back surface 572b of the second base film 572, respectively. The coverlay films 551, 552, 553, 554 are protective films attached to the first to fourth wiring layers 51 to 54 by means of the adhesive layers 561, 562, 563, 564. The first and second base films 571, 572, and the coverlay films 551, 552, 553, 554 are composed of insulating resin such as polyimide. The double-sided tape 58 is, e.g., an acrylic tape.

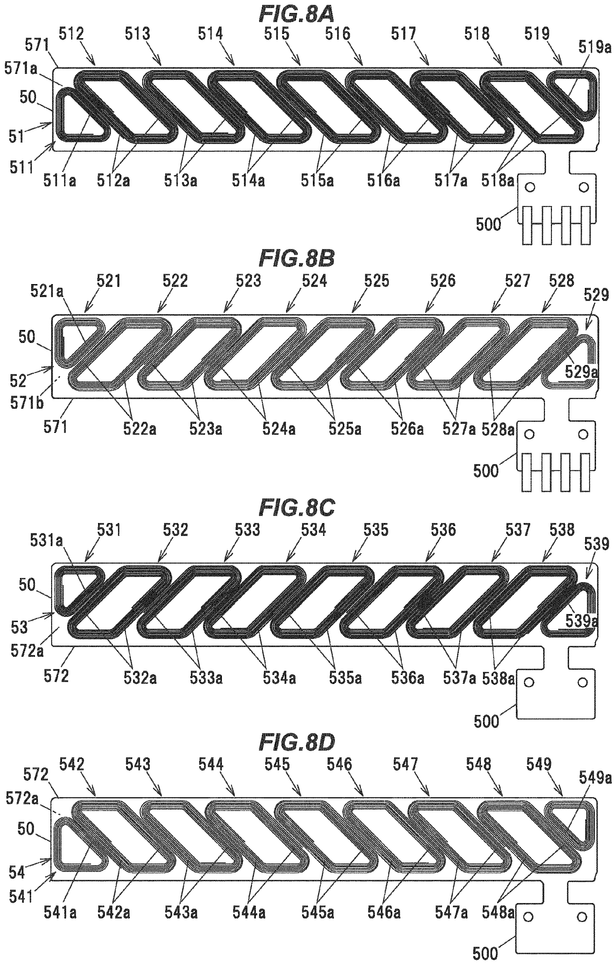

FIG. 8A is a plan view showing the wiring pattern of the first wiring layer 51 formed on the front surface 571a of the first base film 571. FIG. 8B is a plan view showing the wiring pattern of the second wiring layer 52 viewed from the front surface 571a of the first base film 571. FIG. 8C is a plan view showing the wiring pattern of the third wiring layer 53 formed on the front surface 572a of the second base film 572. FIG. 8D is a plan view showing the wiring pattern of the fourth wiring layer 54 as viewed from the front surface 572a side of the second base film 572.

In the first wiring layer 51, first to ninth coils 511 to 519 are formed by wiring patterns that are aligned in the longitudinal direction of the strip portion 50. The first and ninth coils 511, 519 are triangular in shape, and the second to eighth coils 512 to 518 are parallelogram-shaped. Similarly, in the second wiring layer 52, first to ninth coils 521 to 529, which are aligned in the longitudinal direction of the strip portion 50, are formed by wiring patterns. The first and ninth coils 521, 529 are triangular in shape, and the second to eighth coils 522 to 528 are parallelogram-shaped.

In the third wiring layer 53, the first to ninth coils 531 to 539 are formed by wiring patterns that are aligned in the longitudinal direction of the strip portion 50. The first and ninth coils 531, 539 are triangular in shape, and the second to eighth coils 532 to 538 are parallelogram-shaped. Similarly, in the fourth wiring layer 54, first to ninth coils 541 to 549, which are aligned in the longitudinal direction of the strip portion 50, are formed by wiring patterns. The first and ninth coils 541, 549 are triangular in shape, and the second to eighth coils 542 to 548 are parallelogram-shaped.

The first to ninth coils 511 to 519 of the first wiring layer 51 and the first to ninth coils 541 to 549 of the fourth wiring layer 54 have straight portions 511a to 519a and 541a to 549a, respectively, inclined at a predetermined angle (+45°) on one side to the shortitudinal direction of the strip portion 50. The first to ninth coils 521 to 529 of the second wiring layer 52 and the first to ninth coils 531 to 539 of the third wiring layer 53 have straight portions 521a to 529a and 531a to 539a, respectively, inclined at a predetermined angle (-45°) on the other side with respect to the shortitudinal direction of the strip portion 50. The straight portions 521a to 529a, 531a to 539a have straight portions 521a to 529a, 531a to 539a, respectively.

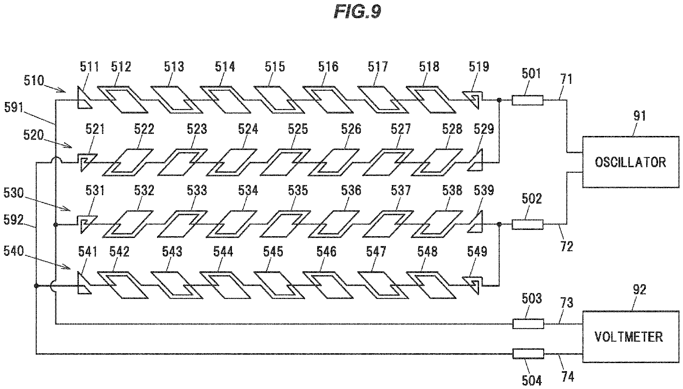

FIG. 9 is a circuit diagram schematically showing an example configuration of an electric circuit composed of the flexible substrate 5, the cable 7, an oscillator 91, and a voltmeter 92. The first to ninth coils 511 to 519 of the first wiring layer 51 are directly connected to form a first inductive load 510, and the first to ninth coils 521 to 529 of the second wiring layer 52 are directly connected to form the second inductive load 520. The first to ninth coils 531 to 539 of the third wiring layer 53 are directly connected to form the third inductive load 530, and the first to ninth coils 541 to 549 of the fourth wiring layer 54 are directly connected to form the fourth inductive load 540.

The first inductive load 510 and the third inductive load 530, and the second inductive load 520 and the fourth inductive load 540 are connected in series between the first terminal 501 and the second terminal 502, respectively. A connecting line 591 connecting the first inductive load 510 and the third inductive load 530 is connected to the third terminal 503, and a connecting line 592 connecting the second inductive load 520 and the fourth inductive load 540 is connected to the fourth terminal 504. The oscillator 91 applies an alternating voltage between the first terminal 501 and the second terminal 502. The voltmeter 92 measures the voltage between the third terminal 503 and the fourth terminal 504.

When torque is applied to the rotating shaft 8, the magnetic permeability in the direction of +45 degrees to the axial direction decreases (or increases) and the magnetic permeability in the direction of -45 degrees to the axial direction increases (or decreases). Therefore, when torque is applied to the rotating shaft 8 with AC voltage applied from the oscillator 91, the inductance of the first inductive load 510 and the fourth inductive load 540 decreases (or increases), and the inductance of the second inductive load 520 and the third inductive load 530 increases (or decreases). As a result, the voltage measured by the voltmeter 92 changes, and the torque applied to the rotating shaft 8 can be detected based on this voltage change.

In FIGS. 8A to 8D, the wiring patterns of the portions of the first to fourth wiring layers 51 to 54 that connect the first to ninth coils 511 to 519, 521 to 529, 531 to 539, 541 to 549 in series, and the wiring patterns between the connecting lines 591, 592 and the circuit elements thereof and the first to fourth terminals 501 to 504 are omitted from the illustration.

The flexible substrate 5 is tightened toward the outer peripheral surface 21b of the inner cylindrical portion 21 of the support member 2 by the heat-shrinkable tube 6, which shrinks upon heating. In the present embodiment, hot melt adhesive 61 (see FIG. 3) is applied to an inner surface 6a of the heat-shrinkable tube 6. The hot melt adhesive 61 melts due to heat when shrinking the heat-shrinkable tube 6 and is interposed between one side surface 5a of the flexible substrate 5 and the inner surface 6a of the heat-shrinkable tube 6 to bond the flexible substrate 5 and the heat-shrinkable tube 6. The other side surface 5b of the flexible substrate 5 adheres to the outer peripheral surface 21b of the inner cylindrical portion 21 without any gap. The heat-shrinkable tube 6 is made of a resin material such as polyolefin or polyvinyl chloride, for example, and shrinks at temperatures of 150°C or higher.

An axial width of the heat-shrinkable tube 6 is wider than a shortitudinal width of the strip portion 50 of the flexible substrate 5, and both ends in the shortitudinal direction of the strip portion 50 are covered by the heat-shrinkable tube 6. Both axial ends of the heat-shrinkable tube 6 are bonded to the outer peripheral surface 21b of the inner cylindrical portion 21 of the support member 2 by the hot melt adhesive 61. This fixes the position of the flexible substrate 5 with respect to the support member 2.

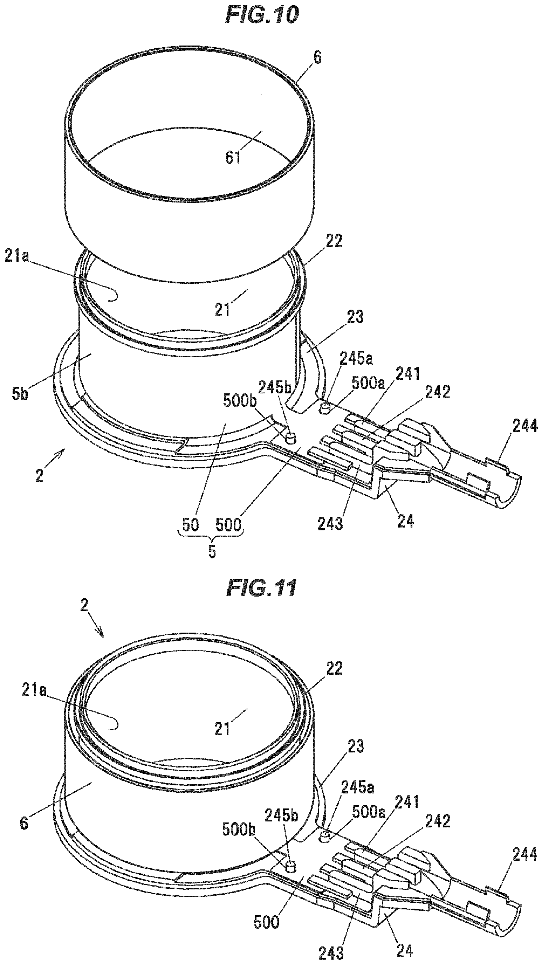

Next, the manufacturing method of the magnetostrictive torque sensor 1 is described with reference to FIGS. 10 to 12. The method of manufacturing the magnetostrictive torque sensor 1 includes the following step: a placing step of placing the flexible substrate 5 around the outer periphery of the inner cylindrical portion 21 of the support member 2 and placing the heat-shrinkable tube 6 around the outer periphery of the flexible substrate 5, a tightening step of heating the heat-shrinkable tube 6 to shrink the flexible substrate 5 toward the outer peripheral surface 21b of the inner cylindrical portion 21, an assembling step of assembling the cover member 3 and the cable 7 to the support member 2 to which the flexible substrate 5 is fixed by the heat-shrinkable tube 6, and a molding step of molding the sealing member 4.

FIG. 10 is a perspective view showing the support member 2 and the flexible substrate 5 arranged around the outer periphery of the inner cylindrical portion 21 of the support member 2, together with the heat-shrinkable tube 6 with hot melt adhesive 61 applied to the inner surface 6a. In FIG. 10, the heat-shrinkable tube 6 before shrinkage by heating is shown axially aligned with the inner cylindrical portion 21 of the support member 2. The inner diameter of the heat-shrinkable tube 6 before shrinkage is larger than the outer diameter of the flange 22 of the support member 2, and the heat-shrinkable tube 6 can pass through the outer periphery side of the flange 22 by relative movement in the axial direction of the support member 2 and the heat-shrinkable tube 6.

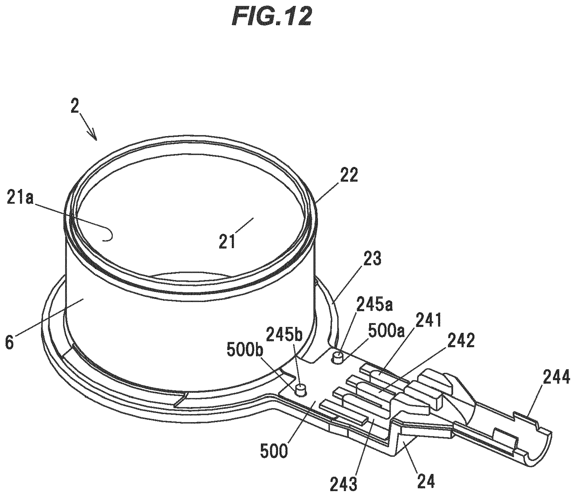

FIG. 11 is a perspective view showing the state in which the heat-shrinkable tube 6 is placed around the outer periphery of the flexible substrate 5 before shrinking and the placing step is completed. FIG. 12 is a perspective view showing the completed state of the tightening step, in which the heat-shrinkable tube 6 is heated and contracted from the state shown in FIG. 11, and the flexible substrate 5 is tightened. The method of heating the heat-shrinkable tube 6 is not limited, but for example, the heat-shrinkable tube 6 can be heated by blowing hot air or by irradiating infrared rays. The temperature of the heat-shrinkable tube 6 heated in the tightening step is lower than the temperature of the molten resin in the molding step (e.g., 300°C).

The cover member 3 has the function of protecting the flexible substrate 5 and the heat-shrinkable tube 6 from the heat of the molten resin in the molding step. The radial thickness of the outer cylindrical portion 31 is a dimension that can prevent molten resin from flowing into the housing space 100 even when subjected to heat and pressure of the molten resin in the molding step, and is, e.g., 1.2 mm or more and 2.7 mm or less. If the thickness of the outer cylindrical portion 31 is less than 1.2 mm, the outer cylindrical portion 31 may melt during the molding step and molten resin may flow into the housing space 100, and if the thickness of the outer cylindrical portion 31 exceeds 2.7 mm, the magnetostrictive torque sensor 1 will be larger than necessary.

At the completion of the tightening step, the flexible substrate 5 is tightened by the heat-shrinkable tube 6 and fixed to the inner cylindrical portion 21 of the support member 2 so that the assembling and molding steps can be performed immediately, even before the hot melt adhesive 61 is solidified.

### (Functions and effects of the embodiment)

The following functions and effects can be obtained according to the embodiment described above.

Since the flexible substrate 5, in which the first to ninth coils 511 to 519, 521 to 529, 531 to 539, 541 to 549 of the first to fourth wiring layers 51 to 54 are formed by the wiring patterns, is fastened to the inner cylindrical portion 21 of the support member 2 by the heat-shrinkable tube 6, for example, the flexible substrate 5 can be fixed more quickly than when the flexible substrate 5 is fixed to the inner cylindrical portion 21 by only using, for example, an adhesive. This makes it possible to improve productivity.

Since the flexible substrate 5 is fixed to the inner cylindrical portion 21 of the support member 2 made of resin, peeling of the flexible substrate 5 due to the difference in thermal expansion coefficient with the support member 2 is unlikely to occur. Also, since the flexible substrate 5 is fixed to the inner cylindrical portion 21 of the support member 2 by tightening the flexible substrate 5 with the heat-shrinkable tube 6, the flexible substrate 5 is not easily peeled off from the inner cylindrical portion 21 by this tightening.

Since both ends in the shortitudinal direction of the strip portion 50 of the flexible substrate 5 are covered by the heat-shrinkable tube 6, the flexible substrate 5 can be held airtight, and moisture absorption by the flexible substrate 5 can be prevented. Furthermore, since the hot melt adhesive 61 is applied to the inside of the heat-shrinkable tube 6, the flexible substrate 5 can be held airtight more securely, and the position of the flexible substrate 5 within the housing space 100 can be prevented from being shifted.

Since the flexible substrate 5 has the protruding piece 500 that is disposed outside the heat-shrinkable tube 6 and the first to fourth terminals 501 to 504 are provided on the protruding piece 500, it is easier to make connections with the first to fourth wires 71 to 74 of the cable 7. In addition, the cable support portion 24 of the support member 2 is provided with protrusions 245a, 245b for fixing the protruding piece 500, making it even easier to make connections with the first to fourth wires 71 to 74.

The combination of the support member 2 with the cover member 3 prevents molten resin from contacting the flexible substrate 5 and the heat-shrinkable tube 6 in the molding step, thus preventing heat damage to the flexible substrate 5 and the heat-shrinkable tube 6.

The heat-shrinkable tube 6 is preferably transparent or translucent, because if the heat-shrinkable tube 6 is transparent or translucent, the position and posture of the flexible substrate 5 can be visually checked from outside the heat-shrinkable tube 6 to detect defective products.

### (Summary of embodiment)

Next, the technical concepts that can be grasped from the above-described embodiment will be described with the aid of the codes, etc. in the embodiment. However, each code in the following description does not limit the components in the scope of the claims to the parts, etc. specifically shown in the embodiment.

According to the feature [1], a magnetostrictive torque sensor 1, configured to be mounted around a rotating shaft 8 having a magnetostrictive effect and to detect torque applied to the rotating shaft 8, includes a support member 2 having a cylindrical portion (inner cylindrical portion 21) through which the rotating shaft 8 is inserted; a flexible substrate 5 arranged around an outer periphery of the cylindrical portion 21 and having a plurality of coils 511 to 519, 52 1 to 529, 531 to 539, 541 to 549 composed of wiring patterns; and a tightening member (heat-shrinkable tube 6) that tightens the flexible substrate 5 toward an outer peripheral surface 21b of the cylindrical portion 21.

According to the feature [2], in the magnetostrictive torque sensor 1 described by the feature [1], the tightening member 6 is a tubular heat-shrinkable tube 6 that shrinks upon heating.

According to the feature [3], in the magnetostrictive torque sensor 1 described by the feature [1] or [2], the flexible substrate 5 has a strip portion 50 in which the plurality of coils 511 to 519, 521 to 529, 531 to 539, 541 to 549 are arranged side by side in a longitudinal direction and both ends in a shortitudinal direction of the strip portion 50 are covered by the tightening member 6.

According to the feature [4], in the magnetostrictive torque sensor 1 described by the feature [3], a hot melt adhesive 61 is applied to an inner surface 6a of the tightening member 6.

According to the feature [5], in the magnetostrictive torque sensor 1 described by the feature [3] or [4], the flexible substrate 5 has a protruding piece 500 extending in the shortitudinal direction from the strip portion 50 and disposed outside the tightening member 6, a plurality of terminals 501 to 504 provided on the protruding piece 500, and a cable 7 having a plurality of wires 71 to 74 connected to the plurality of terminals 501 to 504, respectively.

According to the feature [6], in the magnetostrictive torque sensor 1 described by the feature [5], the support member 2 is provided with a cable support portion 24 for supporting the cable 7 projecting radially outward from the cylindrical portion 21, and the cable support portion 24 is provided with a fixing portion protrusion 245a, 245b for fixing the protruding piece 500.

According to the feature [7], the magnetostrictive torque sensor 1 described by any one of the features [1] to [6], further includes a cover member 3 constituting a housing space 100 to accommodate the flexible substrate 5 between the cylindrical portion 21 of the support member 2, and a sealing member 4 composed of a mold resin molded to cover at least a portion of each of the support member 2 and the cover member 3, wherein the cover member 3 is configured to prevent the mold resin from contacting the flexible substrate 5 and the tightening member 6.

According to the feature [8], a method for manufacturing the magnetostrictive torque sensor 1 described by the feature [2] includes a placing step of placing the flexible substrate 5 around the outer periphery of the cylindrical portion 21 of the support member 2 and placing the heat-shrinkable tube 6 around an outer periphery of the flexible substrate 5; and a tightening step of tightening the flexible substrate 5 toward the outer peripheral surface 21b of the cylindrical portion 21 by heating the heat-shrinkable tube 6 to shrink the heat-shrinkable tube 6.

### (Appendix)

The above description of the embodiment of the invention does not limit the invention as claimed above. It should also be noted that not all of the combinations of features described in the embodiment are essential for the invention to solve the problems of the invention.

Further, the present invention can be implemented with appropriate modifications. For example, in the above embodiment, the case where the magnetostrictive torque sensor 1 has the cover member 3 and the sealing member 4 was described, but depending on the environment of the site where the magnetostrictive torque sensor is installed, the cover member 3 and the sealing member 4 may be absent. In addition, in the above embodiment, the case where the tightening member is a heat-shrinkable tube 6 was described, but it is not limited to this. If the member is capable of tightening the flexible substrate 5, for example, a cylindrical elastic body may be used as a tightening member, or an adhesive tape with an adhesive layer formed on one side of a base material made of band-shaped resin may be used.

### INDUSTRIAL APPLICABILITY

According to a magnetostrictive torque sensor and a method for manufacturing a magnetostrictive torque sensor of the present invention, it is possible to improve productivity compared to the case where a flexible substrate with a plurality of coils is adhesively fixed to a hollow cylindrical magnetic ring to constitute a magnetostrictive torque sensor.

### REFERENCE SIGNS LIST

| | | | |
|---|---|---|---|
| 1: | Magnetostrictive torque sensor | 100: | Housing space |
| 2: | Support member | 21: | Inner cylindrical part |
| 21b: | Outer peripheral surface | 24: | Cable support portion |
| 3: | Cover member | 31: | Outer cylindrical portion |
| 4: | Sealing member | 5: | Flexible substrate |
| 50: | Strip portion | 500: | Protruding piece |
| 501 to 504: | First to fourth terminals | | |
| 511 to 519, 521 to 529, 531 to 539, 541 to 549: | Coils | | |
| 6: | Heat-shrinkable tube | 61: | Hot melt adhesive |
| 7: | Cable | 71 to 74: | First to fourth wires |
| 8: | Rotating shaft | | |

## Claims

1. A magnetostrictive torque sensor, configured to be mounted around a rotating shaft having a magnetostrictive effect and to detect torque applied to the rotating shaft, comprising:
a support member having a cylindrical portion through which the rotating shaft is inserted;
a flexible substrate arranged around an outer periphery of the cylindrical portion and having a plurality of coils composed of wiring patterns; and
a tightening member that tightens the flexible substrate toward an outer peripheral surface of the cylindrical portion.

2. The magnetostrictive torque sensor, according to claim 1, wherein the tightening member is a tubular heat-shrinkable tube that shrinks upon heating.

3. The magnetostrictive torque sensor, according to claim 1 or 2, wherein the flexible substrate has a strip portion in which the plurality of coils are arranged side by side in a longitudinal direction and both ends in a shortitudinal direction of the strip portion are covered by the tightening member.

4. The magnetostrictive torque sensor, according to claim 3, wherein a hot melt adhesive is applied to an inner surface of the tightening member.

5. The magnetostrictive torque sensor, according to claim 3 or 4, wherein the flexible substrate has a protruding piece extending in the shortitudinal direction from the strip portion and disposed outside the tightening member, a plurality of terminals provided on the protruding piece, and a cable having a plurality of wires connected to the plurality of terminals, respectively.

6. The magnetostrictive torque sensor, according to claim 5, wherein the support member is provided with a cable support portion for supporting the cable projecting radially outward from the cylindrical portion, and the cable support portion is provided with a fixing portion protrusion for fixing the protruding piece.

7. The magnetostrictive torque sensor, according to any one of claims 1 to 6, further comprising:
a cover member constituting a housing space to accommodate the flexible substrate between the cylindrical portion of the support member, and a sealing member composed of a mold resin molded to cover at least a portion of each of the support member and the cover member,
wherein the cover member is configured to prevent the mold resin from contacting the flexible substrate and the tightening member.

8. A method for manufacturing the magnetostrictive torque sensor according to claim 2, comprising:
a placing step of placing the flexible substrate around the outer periphery of the cylindrical portion of the support member and placing the heat-shrinkable tube around an outer periphery of the flexible substrate; and
a tightening step of tightening the flexible substrate toward the outer peripheral surface of the cylindrical portion by heating the heat-shrinkable tube to shrink the heat-shrinkable tube.
